Europäisches Patentamt

European Patent Office

Office européen des brevets

(11) Veröffentlichungsnummer: **0 051 126**
**B1**

(12) **EUROPÄISCHE PATENTSCHRIFT**

(45) Veröffentlichungstag der Patentschrift: **26.06.85**

(21) Anmeldenummer: **81106858.4**

(22) Anmeldetag: **02.09.81**

(51) Int. Cl.⁴: **B 60 R 22/26**

(54) **Anordnung zur Befestigung von Sicherheitsgurtschlössern an der Rückenlehne von Rücksitzen in Kraftfahrzeugen.**

(30) Priorität: **30.10.80 DE 3040836**
**30.10.80 DE 3040835**
**30.10.80 DE 8028889 u**

(43) Veröffentlichungstag der Anmeldung:
**12.05.82 Patentblatt 82/19**

(45) Bekanntmachung des Hinweises auf die
Patenterteilung:
**26.06.85 Patentblatt 85/26**

(84) Benannte Vertragsstaaten:
**DE FR GB IT SE**

(56) Entgegenhaltungen:
**DE-B-2 718 140**
**DE-U-1 950 116**
**DE-U-1 988 089**
**DE-U-6 903 795**
**DE-U-8 028 889**
**US-A-3 076 679**
**US-A-3 144 274**
**US-A-3 740 094**

(73) Patentinhaber: **Adam Opel Aktiengesellschaft**
**Bahnhofsplatz 1 Postfach 1560**
**D-6090 Rüsselsheim (DE)**

(72) Erfinder: **Duvenkamp, Manfred**
**Schulstrasse 35**
**D-6097 Trebur-Geinsheim (DE)**
Erfinder: **Höwel, Eckhardt**
**Berliner Strasse 36**
**D-6057 Dietzenbach (DE)**

(74) Vertreter: **Baumgarten, Jochem, Dipl.-Ing. et al**
**C/O Adam Opel Aktiengesellschaft**
**Bahnhofsplatz 1 Postfach 1560**
**D-6090 Rüsselsheim (DE)**

Courier Press, Leamington Spa, England.

## Beschreibung

Die Erfindung bezieht sich auf eine Anordnung zur Befestigung von Sicherheitsgurtschlössern and der Rückenlehne von Rücksitzen in Kraftfahrzeugen, insbesondere bei welchen die Rückenlehne nach vorne umlegbar und das Sitzkissen um seine Vorderkante hochklappbar ist, wobei an der Rückenlehne Mittel zur Halterung der Gurtschlösser vorgesehen sind.

Bekanntlich sind die den Gurtsystemen des Rücksitzes zugehörigen kurzen Gurtteile zwischen dem Sitzkissen und der Rückenlehne vom Fahrzeugboden aus nach oben geführt. Die Gurtteile liegen daher im nichtbenutzten Zustand mit ihren Schlössern auf dem Sitzkissen auf, wo sie beim Platznehmen und Sitzen der Rücksitzpassagiere stören. Handelt es sich bei dem Rücksitz um einen solchen, bei dem zur Vergrößerung des Laderaumes das Sitzkissen um seine Vorderkante hocklappbar und die Rückenlehne nach vorne umlegbar ist, so kommen beim Hockklappen des Sitzkissens die Gurtteile auf dem Fahrzeugboden zu liegen. Nach dem Zurückklappen des Sitzkissens in die Ausgangsstellung müssen die Gurtteile mühsam zwischen Sitzkissen und Rückenlehne nach oben geholt werden bzw. müssen die Gurtteile beim Zurückklappen des Sitzkissens entsprechend nach oben gehalten werden, was jedoch eine Person allein nicht bewirken kann.

Es ist daher durch die DE—B—27 18 140 bekanntgeworden, das kurze Gurtteil an der Vorderseite der Rückenlehne in gestreckter Lage nach oben zu halten, worzu am Gurtschloß ein elastisches Mittel angreift, das an der Rückwand der Rückenlehne befestigt und durch eine Öffnung in derselben nach vorne zum Gurtschloß geführt ist. Das Gurtschloß mit Gurtband wird daher selbsttätig immer an der Rückenlehne gehalten, wenn der Sicherheitsgurt abgelegt ist. Beim Anlegen des Gurtes muß das Gurtschloß entgegen der Wirkung des elastischen Mittels von der Rückenlehne wegbewegt werden, auf die hin es bei angelegtem Gurt immer vorgespannt bleibt. Diese Anordnung ist relativ aufwendig, da nicht nur eine Änderung in der Ausbildung der Rückenlehne notwendig ist, sondern auch ein zusätzliches Teil Verwendung findet.

Durch die US—A—3 740 094 ist es bekanntgeworden, mit Gurtteilen verbundene metallische Gurtschlösser mittels an der Rückenlehne angeordneter Magnete an der Rückenlehne zu halten. Eine solche Anordnung ist ebenfalls aufwendig und ergibt dann keine sichere Halterung, wenn die Rückenlehne schwenkbar angeordnet ist und ein Umklappen derselben vorgenommen wird. Keine sichere Halterung ergibt sich auch bei einer Anordnung nach der DE—U—1 950 116, bei der ein mit einer Durchbrechung versehenes Beschlagteil in ein Halteelement eingehängt wird.

Der Erfindung liegt die Aufgabe zugrunde, hier eine Vereinfachung sowie eine sichere Halterung der Gurtschlösser an der Rückenlehne zu erzielen, wobei wie bekannt in Kauf genommen wird, daß das kurze Gurtteil mit dem Gurtschloß nach Ablegen des Sicherheitsgurtes nicht selbsttätig zur Halterung an der Rückenlehne kommt. Dafür wird aber das Anlegen und Tragen des Sicherheitsgurtes in keiner Weise beeinflußt. Es ist in erster Linie wichtig, daß die Gurtschlösser an der Rückenlehne gehalten werden, wenn das Sitzkissen in die Gebrauchslage zurückgeklappt wird. Werden die Gurtschlösser beim Ablegen des Sicherheitsgurtes nicht gleich zur Halterung an der Rückenlehne gebracht, so kann diese Halterung dann erfolgen, wenn die Gurtschlösser auf dem Sitzkissen stören oder spätestens notwendigerweise dann, wenn das Sitzkissen vor der "Ladestellung" in die Gebrauchsstellung zurückgeklappt wird.

Erfindungsgemäß bestehen bei einer Anordnung der eingangs gekennzeichneten Art die Mittel zur Halterung der Gurtschlösser je aus einem am Polsterbezug der Rückenlehne angebrachten, einen Schaft und einen flachen Kopf aufweisenden Knopf, und an der Rückseite des Gurtschlosses ist ein mit Hinterschneidungen für den Kopf versehener Führungsschlitz vorgesehen, mittels dessen das Gurtschloß auf den Knopf aufschiebbar ist.

Der Führungsschlitz am Gurtschloß verläuft zweckmäßig quer zur Längsachse des Gurtschlosses und von einer Seite her bis etwas über die Mitte des Gurtschlosses hinaus. Es kann auch je ein Führungsschlitz von der Seite her bis kurz vor die Mitte des Gurtschlosses verlaufen. Weiterhin kann in vorteilhafter Weise der Führungsschlitz von einer Seite des Gurtschlosses bis zur anderen Seite verlaufen und in der Mitte eine Raststelle für den Schaft des Knopfes vorgesehen sein. Das Gurtschloß kann dabei nicht beim Hochklappen des Sitzkissens gegebenenfalls mit hochgehoben und damit ausgehängt werden.

Ausführungsbeispiele der Erfindung werden anhand der Zeichnung näher beschrieben, in welcher zeigen:

Fig. 1 einen Rücksitz in Vorderansicht,

Fig. 2 eine Seitenansicht zu Fig. 1,

Fig. 3 eine Rückansicht des Gurtschlosses,

Fig. 4 einen Schnitt nach Linie IV—IV in Fig. 1 in vergrößertem Maßstab,

Fig. 5 bis 7 weiter Ansichten des Gurtschlosses von der Rückseite und

Fig. 8 eine Seitenansicht des mit dem Polsterbezug verbundenen Knopfes.

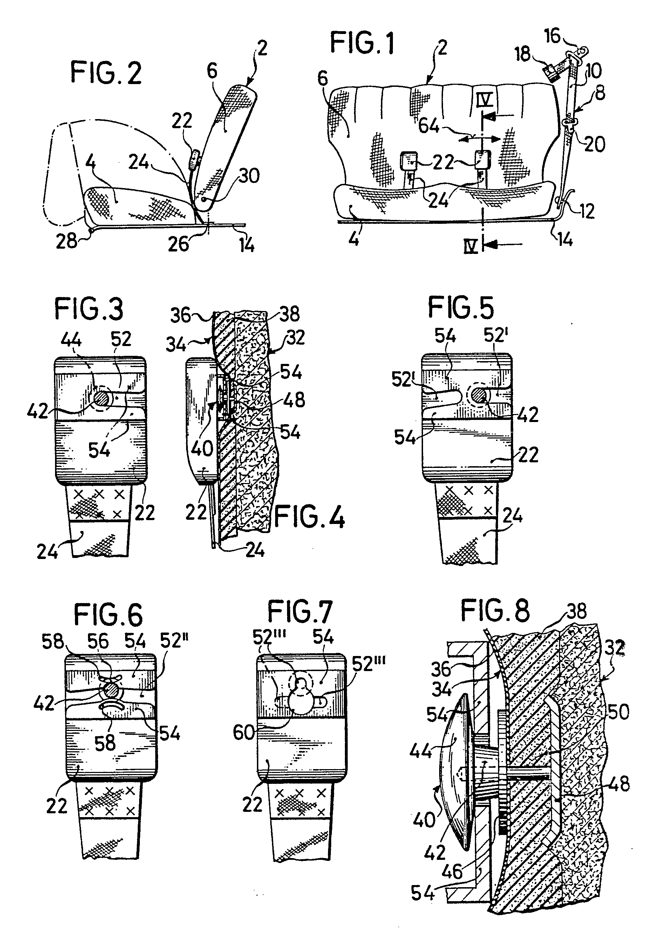

Der Rücksitz 2 besteht aus dem Sitzkissen 4 und der Rückenlehne 6. In Fig. 1 ist rechts ein Sicherheitsgurtsystem 8 dargestellt, das aus dem den Schulter- und Beckengurt bildenden Gurtband 10 besteht, das bei 12 am Fahrzeugboden 14 oder in dessen Nähe verankert ist und über eine Unlenköse 16 in enen Gurtaufroller 18 einmündet. Die am Gurtband 10 angebrachte Schloßzunge 20 kann für das Anlegen des Sicherheitsgurtes mit dem Gurtschloß 22 verbunden werden, das an dem kurzen Gurtteil 24 sich befindet, das, wie Fig. 2 zeigt, bei 26 am Fahrzeugboden 14 verankert ist. Das Gurtteil 24 ist zwischen Sitzkissen 4 und Rückenlehne 6 nach oben geführt, wobei das Gurtschloß 22 an der Rückenlehne 6 gehalten ist. Von Gurtsystem auf der anderen Seite des Rücksitzes 2 ist nur das kurze Gurtteil 24 mit dem Gurtschloß 22 dargestellt. Wie außerdem aus Fig. 2 ersichtlich ist, kann das Sitzkissen 4 um seine Vorderkante 28 in die in strickpunktierten Linien dargestellte Lage hockgeklappt werden, worauf die Rückenlehne 6 um ihre Schwenkachse 30 nach vorne umgelegt werden kann.

In Fig. 4, die einen Schnitt nach Linie IV—IV in Fig. 1 zeigt, ist die Polsterung insgesamt mit 32 bezeichnet. Als Polsterbezug 34 sei der eigentliche Bezugsstoff 36 mit einer Schaumstoffauflage 38 verstanden. An dem Polsterbezug 34 ist ein Knopf 40 befestigt, der, wie Fig. 8 besser zeigt, aus einem Schaft 42, einem Kopf 44 und einem Kragen 46 besteht. Die Befestigung am Polsterbezug 34 erfolgt dadurch, daß von der Rückseite her ein an einer Scheibe 48 angebrachter Stift 50 durch den Polsterbezug 34 hindurchgestochen und mit dem Knopf 40 druckknopfartig verbunden wird. Beim Hindurchstechen des Stiftes 50 durch den Polsterbezug 34 werden in der Regel die Gewebefäden des Bezugsstoffes 36 nicht zerstört, so daß die Festigkeit desselben erhalten bleibt. Durch das Zusammendrücken des Polsterbezuges 34 ergibt sich eine Mulde am demselben, do saß der Knopf 40 erwas versenkt am Polsterbezug 34 angeordnet ist.

An der Rückseite des Gurtschlosses 22 ist von Wandungsteilen 54 ein Führungsschlitz 52 gebildet. Die Wandungsteile 54, die an die Gurtschloßverkleidung angeformt sein könne, bilden Hinterschneidungen für den Köpf 44 des Knopfes 40, so daß das Gurtschloß 22 auf den Knopf 40 auggeschoben und so gehalten werden kann. Diese Halterung zeigt Fig. 4. Aus Fig. 3 geht hervor, daß der Führungsschlitz 52 quer zur Längsachse des Gurtschlosses 22 verläuft und sich von der Seite her bis etwas über die Mitte des Gurtchlosses 22 erstreckt. Des Gurtschloß 22 kann also in diesem Falle von einer Seite her auf den Knopf 40 aufgeschoben werden. Bei der Ausbildung von zwei je von einer Seite ausgehenden Führungschlitzen 52' gema8ß Fig. 5 kann das Gurtschloß 22 von zwei Seiten her auf den Knopf 50 aufgeschoben werden. Dies ist auch bei einem von der einen Seite zur anderen Seite durchgehenden Führungsschlitz 52'' gemäß Fig. 6 der Fall. Hier ist in der Mitte eine Raststelle 56 für den Schaft 42 des Knopfes 40 ausgebildet. Ausnehmungen 58 sorgen für ein federndes Nachgeben der Wandungen 54 an der Raststelle 56. Schließlich zeigt Fig. 7 eine Ausführungsform, bei der eine Erweiterung 60 in der Wandung 54 zum Aufstecken des Gurtschlosses 22 auf den Knopf 40 vorgesehen ist. Von der Erweiterung 60 aus führt der Führungsschlitz 52''' nach der einen und/oder der anderen Seite oder nach oben.

Wie bereits erwähnt, dürfte der Verlauf des Führungsschlitzes 52 quer zur Längsachse des Gurtschlosses 22 günstiger sein, da hierbei ein Aushängen des Gurtschlosses 22 beim Hocklappen des Sitzkissens 4 nich erfolgen kann.

Dadurch, daß die Unterseite des Kopfes 44 des Knopfes 40 zum Schaft 42 hin leicht konisch verläuft, wird das Einführen in den Führungsschlitz 52 erleichtert. In Fig. 1 ist die Bewegung zum Aufschieben des Gurtschlosses 22 auf den Knopf 40 bzw. das Abnehmen davon mit dem Pfeil 64 angedeutet. Der Führungsschlitz 52 kann daher, wie in Fig. 3, 5 und 6 ersichtlich, leicht kreisbogenförmig verlaufen.

**Patentansprüche**

1. Anordnung zur Befestigung von Sicherheitsgurtschlössern (22) an der Rückenlehne (6) von Rücksitzen (2) in Kraftfahrzeugen, insbesondere bei welchen die Rückenlehne (6) nach vorne umlegbar und das Sitzkissen (4) um seine Vorderkante hochklappbar ist, wobei an der Rückenlehne (6) Mittel zur Halterung der Gurtschlösser (22) vorgesehen sind, dadurch gekennzeichnet, daß die Mittel je aus einem am Polsterbezug (34) der Rückenlehne (6) angebrachten, einen Schaft (42) und einen flachen Kopf (44) aufweisenden Knopf (40) bestehen und an der Rückseite der Gurtschlosses (22) ein mit Hinterschneidungen für den Kopf (44) versehener Führungsschlitz (52) vorgesehen ist, mittels dessen das Gurtschloß (22) auf den Knopf (40) aufschiebbar ist.

2. Anordnung nach Anspruch 1, dadurch gekennzeichnet, daß der Führungsschlitz (52) quer zur Längsachse des Gurtschlosses (22) und von einer Seite her bis etwas über die Mitte des Gurtschlosses (22) hinaus verläuft.

3. Anordnung nach Anspruch 1, dadurch gekennzeichnet, daß je ein Führungsschlitz (52') von der Seite her bis kurz vor die Mitte des Gurtschlosses (22) verläuft.

4. Anordnung nach Anspruch 1, dadurch gekennzeichnet, daß der Führungsschlitz (52'') von einer Seite des Gurtschlosses (22) bis zur anderen Seite verläuft und in der Mitte eine Raststelle (56) für den Schaft (42) des Knopfes (40) vorgesehen ist.

5. Anordnung nach Anspruch 1, dadurch gekennzeichnet, daß im Führungsschlitz (52''') eine Erweiterung (60) für das Einführen des Kopfes (44) vorgesehen ist und der Führungsschlitz (52''') von der Erweiterung (60) aus quer zur oder in Richtung der Längsachse der Gurtschlosses (22) verläuft.

6. Anordnung nach Anspruch 1 bis 5, dadurch gekennzeichnet, daß der Knopf (40) mit einem an dem Bezug (34) anliegenden Kragen (46) versehen ist, dessen Abstand vom Kopf (44) größer als die Dicke der Wandung (54) ist, von der der Führungsschlitz (52) gebildet wird, daß der Führungsschlitz (52) von der Gurtschloßverkleidung gebildet ist und daß die Wandung (54) zur Bildung desselben aus der Rückseite des Gurtschlosses (22) hervortritt.

**Revendications**

1. Dispositif pour fixer des boucles der fermeture de ceinture de sécurité (22) au dossier (6) de siège arrière (2) de véhicules automobiles, notamment à dossier (6) rabattable vers l'avant et à assise (4) relevable par pivotement autour de son bord avant, des moyens étant prévus sur le dossier (6) pour maintenir les boucles de fermeture (22), caractérisé en ce que les moyens sont constitués d'un bouton (40) fixé à la garniture (34) du dossier (6) et comportant un fût (42) et une tête plate (44), et qu'une fente de guidage (52) avec des contre-dépouilles pour la tête (44) est prévue sur la face arrière de la boucle de fermeture (22), permettant d'enfiler la boucle de fermeture (22) sur le bouton (40).

2. Dispositif selon la revendication 1, caractérisé en ce que la fente de guidage (52) est perpendiculaire à l'axe longitudinal de la boucle de fermeture (22) et, paratant d'un côté s'étend quelque peu au-delà du milieu de la boucle de fermeture (22).

3. Dispositif selon la revendication 1, caractérisé en ce qu'une fente de guidage (52'), partant de chacun des côtés de la boucle de fermeture (22), s'étend jusqu'à faible distance du milieu de celle-ci.

4. Dispositif selon la revendication 1, caractérisé en ce que la fente de guidage (52'') va d'un côté de la boucle de fermeture (22) à l'autre, et qu'une encoche d'arrêt (56) est prévue au milieu pour le fût (42) du bouton (40).

5. Dispositif selon la revendication 1, caractérisé en ce qu'une partie élargie (60) est prévue dans la fente de guidage (52''') pour introduire la tête (44), et que la fente de guidage (52''') s'étend de la partie élargie (60) dans le sens de l'axe longitudinal de la boucle de fermeture (22), ou perpendiculairement à cet axe.

6. Dispositif selon l'une quelconque des revendications 1, 2, 3, 4, 5, caractérisé en ce que le bouton (40) est muni d'une collerette (46) en appui contre la garniture (34) et située à une distance de la tête (44) supérieure à l'épasseur de la paroi (54) dans laquelle est formée la fente de guidage (52), que la fente de guidage (52) est formée par l'habillage de la boucle de fermeture, et que la paroi (54) fait saillie sur la face arrière de la boucle de fermeture (22) pour former la fente de guidage.

**Claims**

1. Arrangement for the attachment of safety belt locks (22) to the back rest (6) of rear seats (2) in motor vehicles, particularly in which the back rest (6) can be tilted forwards and the seat cushion (4) can be folded upwards about its front edge, wherein means for mounting the belt locks (22) are provided on the back rest (6), characterised by the fact that the means each consist of a knob (40) mounted on the upholstery covering (34) of the back rest (6) and comprising a shank (42) and a flat head (44), and on the rear side of the belt lock (22) is provided a guide slot (52) which is provided with undercut surfaces for the head (44) and by means of which the belt lock (22) can be fitted over the knob (40).

2. Arrangement according to claim 1, characterised by the fact that the guide slot (52) extends perpendicularly to the longitudinal axis of the belt lock (22), and from one side to slightly beyond the centre of the belt lock (22).

3. Arrangement according to claim 1, characterised by the fact that a guide slot (52') extends from each side to a point just before the centre of the belt lock (22).

4. Arrangement according to claim 1, characterised by the fact that the guide slot (52'') extends from one side of the belt lock (22) to the other, and in the middle is provided a locking point (56) for the shank (42) of the knob (40).

5. Arrangement according to claim 1, characterised by the fact that in the guide slot (52''') is provided an enlarged zone (60) for introducing the head (44) and from the enlarged zone (60) the guide slot (52''') extends perpendicularly to or in the direction of the longitudinal axis of the belt lock (22).

6. Arrangement according to claims 1 to 5, characterised by the fact that the knob (40) is provided with a collar (46) which abuts against the fabric (34) and whose distance from the head (44) is greater than the thickness of the wall (54) by which the guide slot (52) is formed, the guide slot (52) is formed by the casing of the belt lock (22), and the wall (54) for forming same protrudes from the rear side of the belt lock (22).

0 051 126

FIG.2

FIG.1

FIG.3

FIG.4

FIG.5

FIG.6

FIG.7

FIG.8

1